# EUROPÄISCHE PATENTANMELDUNG

(11) **EP 4 446 164 A1**
(43) Veröffentlichungstag der Anmeldung: **16.10.2024**
(21) Anmeldenummer: 23167295.7
(22) Anmeldetag: 11.04.2023
(51) Int. Cl.: B60N 2/30, B61D 33/00

(54) **SITZVORRICHTUNG FÜR EINE PERSONENBEFÖRDERUNGSVORRICHTUNG, PERSONENBEFÖRDERUNGSVORRICHTUNG, VERFAHREN ZUM UMKLAPPEN EINER SITZVORRICHTUNG, VERWENDUNG EINES ELEKTROPERMANENTMAGNETEN SOWIE SEILBAHN**

(71) Anmelder: Bartholet Maschinenbau AG, 8890 Flums (CH)
(72) Erfinder: Cioldi, Elio, 6746 Nivo (CH); Stampfl, Raphael, 8890 Flums (CH); Bartholet, Roland, 8881 Tscherlach (CH); Menzi, Markus, 8758 Obstalden (CH)
(74) Vertreter: Hepp Wenger Ryffel AG

(57) **Zusammenfassung**

Eine Sitzvorrichtung (1) für eine Personenbeförderungseinrichtung (2) umfasst eine Sitzfläche (3) und eine Stützvorrichtung (4), wobei die Sitzfläche (3) klappbar ausgebildet ist und von einer Sitzposition in eine Klappposition bringbar ist. Die Sitzvorrichtung (1) umfasst eine Hochstellvorrichtung (5), insbesondere eine Federvorrichtung, durch die die Sitzfläche (3) von der Sitzposition in die Klappposition bringbar ist Die Sitzvorrichtung (1), insbesondere die Stützvorrichtung (4), umfasst eine Magnetvorrichtung (6), durch die die Sitzfläche in der Sitzposition haltbar ist.

## Beschreibung

Die Erfindung umfasst eine Sitzvorrichtung für eine Personenbeförderungsvorrichtung, eine Personenbeförderungsvorrichtung, ein Verfahren zum Umklappen einer Sitzvorrichtung, die Verwendung eines Elektropermanentmagneten zum Lösen einer Sitzvorrichtung sowie eine Seilbahn umfassend einer Personenbeförderungsvorrichtung.

Personenbeförderungsvorrichtungen wie Seilbahnen mit Sitzvorrichtungen sind weitläufig bekannt. Hierbei spielt üblicherweise die Personenbeförderungskapazität eine grosse Rolle, sodass die Sitzvorrichtungen möglichst eng angeordnet werden umso möglichst viele Passagiere transportieren zu können. Dies ist üblicherweise in allen öffentlichen Personentransportvorrichtungen wie Bussen, Zügen und auch Seilbahn der Fall. Gleichzeitig müssen mit öffentlichen Personenbeförderungsvorrichtungen auch Personen mit reduzierter Mobilität (PRM) wie beispielsweise Rollstuhlfahrer transportiert werden. Nachteilig ist hier bisher, dass Rollstuhlfahrer ausschliesslich mit sehr viel manueller Unterstützung von Drittpersonen transportiert werden können. Zusätzlich sind üblicherweise separate Vorrichtungen zum Transport von Rollstuhlfahrern notwendig.

Es ist daher die Aufgabe der Erfindung die Nachteile des Standes der Technik zu vermeiden und insbesondere eine Sitzvorrichtung, eine Personenbeförderungsvorrichtung, eine Seilbahn, ein Verfahren zum Umklappen einer Sitzvorrichtung sowie die Verwendung eines Elektropermanentmagneten zum Lösen einer Sitzvorrichtung zu schaffen, die ein selbständiges Transportieren eines Rollstuhlfahrers ermöglichen.

Die Aufgabe wird durch die Sitzvorrichtung, die Personenbeförderungsvorrichtung, die Seilbahn, das Verfahren zum Umklappen einer Sitzvorrichtung sowie die Verwendung eines Elektropermanentmagneten zum Lösen einer Sitzvorrichtung gemäss den unabhängigen Ansprüchen gelöst.

Insbesondere wird die Aufgabe durch eine Sitzvorrichtung für eine Personenbeförderungsvorrichtung gelöst, die eine Sitzfläche und eine Stützvorrichtung umfasst. Die Sitzfläche ist klappbar ausgebildet und von einer Sitzposition in eine Klappposition bringbar. Die Sitzvorrichtung umfasst ein Hochstellvorrichtung, insbesondere eine Federvorrichtung, durch die die Sitzfläche von der Sitzposition in die Klappposition bringbar ist. Die Sitzvorrichtung, insbesondere die Stützvorrichtung, umfasst eine Magnetvorrichtung, durch die Sitzfläche in der Sitzposition haltbar ist.

Durch eine derartige Sitzvorrichtung kann bei Bedarf die Sitzfläche schnell in die Klappposition gebracht werden, sodass mehr Platz für einen Rollstuhlfahrer vorhanden ist. Gleichzeitig hält die Sitzvorrichtung sicher in der Sitzposition, wenn dies erwünscht ist. Die Sitzfläche ist die Fläche, die eine Person zum Sitzen benötigt. Es können auch mehrere Sitzflächen ausgebildet sein. In der Sitzposition ist die Sitzfläche im Wesentlichen horizontal ausgerichtet, sodass eine Person darauf sitzen kann. In der Klappposition ist die Sitzfläche im Wesentlichen 90° zur Sitzposition rotiert.

Die Hochstellvorrichtung kann eine Federvorrichtung oder eine hydraulische oder pneumatische Vorrichtung sein. Die Federvorrichtung kann beispielsweise eine Torsionsfeder sein.

Die Magnetvorrichtung kann ein ferromagnetisches Metall umfassen.

Somit ist die Magnetvorrichtung durch einen Magneten befestigbar.

Die Magnetvorrichtung kann einen Permanentmagneten umfassen, insbesondere einen elektrisch abschaltbaren Permanentmagneten.

Durch den Permanentmagneten ist die Magnetvorrichtung durch ein ferromagnetisches Metall befestigbar.

Die Aufgabe wird weiterhin durch eine Personenbeförderungsvorrichtung umfassend eine Sitzvorrichtung wie vorhergehend beschrieben gelöst. Die Personenbeförderungsvorrichtung umfasst bevorzugt ein Kommunikationsmodul.

Eine derartige Personenbeförderungsvorrichtung kann durch normale Passagiere sowie Rollstuhlfahrer selbsttätig verwendet werden.

Die Verwendung eines Kommunikationsmoduls umfasst die Möglichkeit die Position der Sitzvorrichtung von der Sitzposition in die Klappposition ferngesteuert einstellen zu können.

Es kann ein zu der Magnetvorrichtung korrespondierendes Magnetelement ausgebildet sein, wobei zwischen Magnetvorrichtung und Magnetelement eine, insbesondere elektrisch lösbare, Magnethaltekraft erzielbar ist.

Das Magnetelement kann ein Permanentmagnet, insbesondere ein fernsteuerbarer Elektropermanentmagnet, sein.

Durch einen Elektropermanentmagneten kann die Magnetkraft kurzfristig unterbrochen werden und so ein Lösen der Sitzvorrichtung erzielt werden. Die Sitzvorrichtung kann dann von der Sitzposition in die Klappposition klappen. Bei Verwendung eines steuerbaren Elektropermanentmagnetes kann dies durch Ansteuerung durch das Kommunikationsmodul geschehen, sodass die Sitzvorrichtung ferngesteuert in die Klappposition bringbar ist. Das Kommunikationsmodul kann daher den Elektropermanentmagneten ansteuern.

Das Magnetelement kann alternativ ein Elektromagnet sein, und die Magnetvorrichtung insbesondere ein Permanentmagnet sein. Hierbei kann in der Sitzposition die Magnetvorrichtung an den ausgeschiedenen Elektromagneten anhaften und durch Einschalten des Elektromagneten mit einem abstossenden Magnetfeld die Magnetvorrichtung gelöst und somit die Sitzvorrichtung von der Sitzposition in die Klappposition bringbar sein. Auch in diesem Fall kann das Kommunikationsmodul den Elektromagneten ansteuern und so ferngesteuert die Sitzvorrichtung in die Klappposition bringen.

Beispielsweise sind zwischen Magnetelement und Magnetelementvorrichtung folgende Materialkombinationen denkbar: Ein Elektropermanentmagnet und ein ferromagnetisches Metall, ein Permanentmagnet und Elektromagnet, wobei jeweils Magnetelement und Magnetvorrichtung austauschbar entweder der eine oder der andere Anteil sein können.

Die Sitzvorrichtung kann mehrere Sitzflächen nebeneinander aufweisen.

Somit können mehrere Personen auf der Sitzvorrichtung sitzen und in der Klappposition gleichzeitig viel Platz für einen Rollstuhlfahrer geschaffen werden.

Die Personenbeförderungsvorrichtung kann so ausgebildet sein, dass zwei gegenüberliegende Sitzvorrichtungen ausgebildet sind.

Somit kann bei zwei erfindungsgemässen Sitzvorrichtungen gegenüberliegend mittig zwischen den Sitzvorrichtungen Platz für einen Rollstuhlfahrer geschaffen werden.

Der Freiraum zwischen den Sitzvorrichtungen in der Klappposition beträgt zumindest im Wesentlichen 1m, insbesondere 1,2m.

Somit kann zwischen zwei gegenüberliegende Sitzvorrichtungen ein Rollstuhlfahrer bequem Platz finden.

Das Kommunikationsmodul kann derartig ausgebildet sein, dass ein Steuerbefehl von einer Steuerung empfangbar ist, die zu einem lösenden Magnetkraft zwischen Magnetelement und Magnetvorrichtung führt.

Somit kann ferngesteuert bei Zusteigen eines Rollstuhlfahrers Platz für ein Rollstuhlfahrer geschaffen werden.

Zur Lösung der Aufgabe führt weiterhin ein Verfahren zum Umklappen einer Sitzvorrichtung wie vorhergehend beschrieben in einer Personenbeförderungsvorrichtung wie vorhergehend beschrieben von einer Sitz- in einer Klappposition. Das Magnetelement und die Magnetvorrichtung werden durch elektrischen Impuls voneinander getrennt und die Sitzvorrichtung durch die Kraft der Hebevorrichtung in die Klappposition gebracht.

Die Hebevorrichtung ist derartig ausgestaltet, dass ihre Kraft die Gewichtskraft der Sitzfläche übersteigt und so bei Lösen der Magnetvorrichtung die Sitzfläche in die Klappposition bringbar ist.

Zum Bringen der Sitzvorrichtung in die Sitzposition zurück, muss die Sitzfläche manuell in die Sitzposition gedrückt werden, bis die Magnetkraft die Sitzfläche wieder in der Sitzposition fixiert. Durch die Verwendung eines Elektropermanentmagneten oder eines Elektromagneten mit Permanentmagneten ist nur ein elektrischer Impuls zum Lösen notwendig. Ohne elektrische Beaufschlagung besteht die Magnetkraft automatisch.

Somit kann eine Sitzvorrichtung leicht in die Klappposition gebracht werden und Platz für ein Rollstuhlfahrer schaffen.

Zur Lösung der Aufgabe führt weiterhin die Verwendung eines Elektropermanentmagneten zum Lösen einer Sitzvorrichtung aus einer Sitzposition, in dem das Magnetfeld des Elektropermanentmagneten kurzfristig unterbrochen wird, sodass die Sitzvorrichtung ferngesteuert in einer Klappposition gebracht wird.

Somit kann eine Personenbeförderungsvorrichtung leicht einen Rollstuhl transportieren.

Zur Lösung der Aufgabe führt weiterhin eine Seilbahn umfassend einer Steuerung und eine Personenbeförderungsvorrichtung wie vorhergehend beschrieben, wobei die Personenbeförderungsvorrichtung an einem Seil der Seilbahn lösbar befestigbar ist. Die Steuerung ist so ausgebildet, dass die Sitzvorrichtung von der Sitzposition in die Klappposition bringbar ist, in dem die Steuerung ein Steuerbefehl über das Kommunikationsmodul an die Magnetvorrichtung oder das Magnetelement sendet.

Somit kann aus einer Seilbahnstation die Sitzfläche in einer Gondel ferngesteuert hochgeklappt werden, so dass ein Rollstuhlfahrer zusteigen kann.

Im Folgenden wird die Erfindung in Ausführungsbeispielen anhand von Figuren näher erläutert.

Hierbei zeigt
- Figur 1: eine Personenbeförderungsvorrichtung in einer perspektivischen Ansicht,
- Figur 2: einen Schnitt durch eine Personenbeförderungsvorrichtung in der Sitzposition,
- Figur 3: einen Schnitt durch eine Personenbeförderungsvorrichtung in der Klappposition,
- Figur 4: eine Detailansicht an der Sitzvorrichtung.

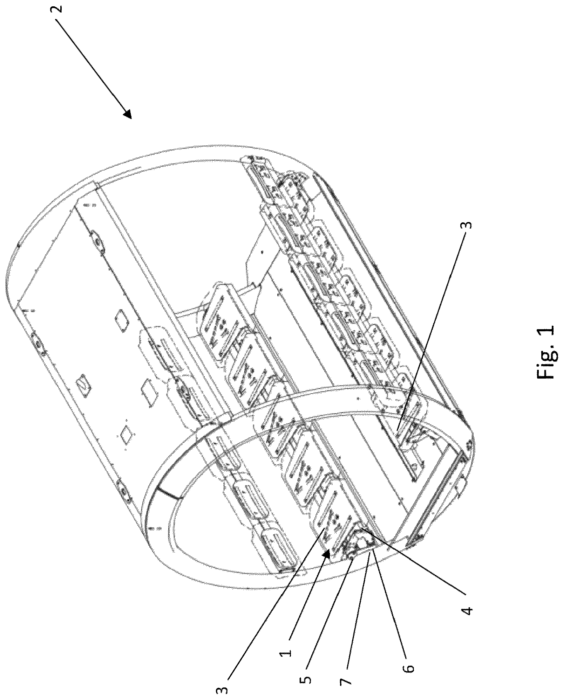

Figur 1 zeigt eine perspektivische Ansicht einer Personenbeförderungsvorrichtung 2. Die Personenbeförderungsvorrichtung 2 ist eine Seilbahnkabine mit 10 Sitzplätzen. Ein Eingang in die Personenbeförderungsvorrichtung 2 befindet sich auf einer der Stirnseiten. Die Personenbeförderungsvorrichtung 2 umfasst zwei Sitzvorrichtungen 1, wobei jede Sitzvorrichtung 1 fünf Sitzplätze aufweist. Die Sitzvorrichtung 1 umfasst daher eine Sitzfläche 3, die klappbar ausgebildet ist. Die Sitzfläche 3 ist in der Sitzposition dargestellt. Durch eine Hochstellvorrichtung 5 in Form einer Federvorrichtung, kann die Sitzfläche 3 von der Sitzposition in die Klappposition gebracht werden. In der Sitzposition ist die Sitzfläche 3 durch eine Stützvorrichtung 4 abgestützt. Die Sitzvorrichtung 1 ist durch die Stützvorrichtung 4 abgestützt und durch eine Magnetvorrichtung 6 wird die Sitzfläche 3 in der Sitzposition gehalten. Die Magnetvorrichtung 6 tritt mit dem korrespondierenden Magnetelement 7 in Wechselwirkung, wobei zwischen Magnetvorrichtung 6 und Magnetelement 7 in der Sitzposition eine Magnethaltekraft ausgebildet ist. Diese Magnethaltekraft ist auflösbar durch einen elektrischen Impuls, der das Magnetfeld entweder kurz unterbricht oder ein weiteres Magnetfeld erzeugt welches stärker ist als das bisherige Magnetfeld und entgegen gesetzt also nicht anziehend wirkt. Hierzu sind zwischen Magnetelement 7 und Magnetelementvorrichtung 6 folgende Materialkombinationen denkbar. Ein Elektropermanentmagnet und ein ferromagnetisches Metall, ein Permanentmagnet und Elektromagnet, wobei jeweils Magnetelement 7 und Magnetvorrichtung 6 austauschbar entweder der eine oder der andere Anteil sein können. Bevorzugt ist die Magnetvorrichtung 6 ein ferromagnetisches Material und das Magnetelement 7 ein elektrisch abschaltbarer Elektropermanentmagnet. Ein derartiger Elektropermanentmagnet kann auch ferngesteuert durch ein Kommunikationsmodul (nicht dargestellt) auf Wunsch die Magnethaltekraft beenden und so dazu führen, dass die Sitzflächen 3 hochgeklappt werden. Im hochgeklappten Zustand kann dann ein Rollstuhlfahrer selbstständig in die Personenbeförderungsvorrichtung 2 einfahren.

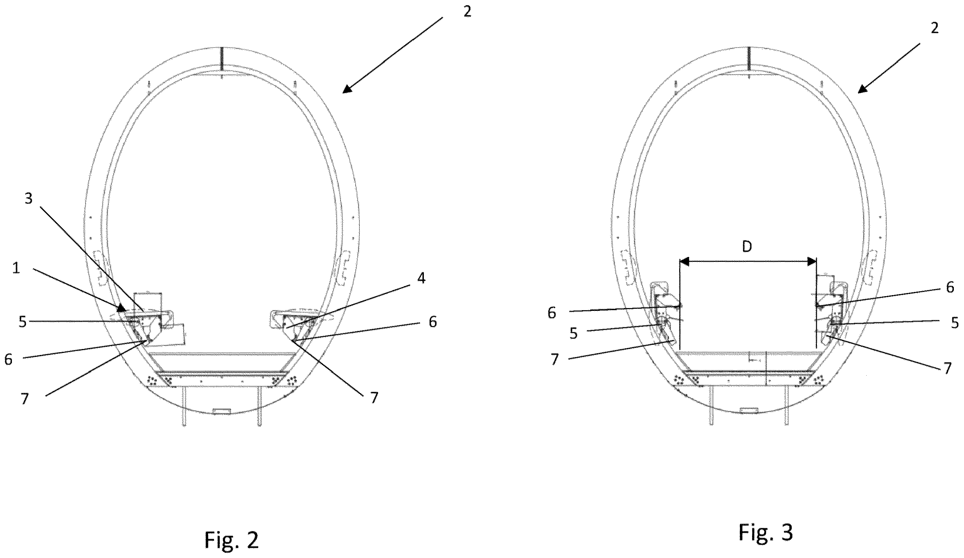

Figur 2 zeigt einen Querschnitt durch die Personenbeförderungsvorrichtung 2 aus Figur 1. Die Sitzfläche 3 befindet sich in der Sitzposition.

Figur 3 zeigt die Personenbeförderungsvorrichtung 2 aus Figur 2 und 1, wobei hier die Sitzvorrichtung 1 in der Klappposition angeordnet ist. In der Klappposition ist der Abstand D zwischen den gegenüberliegenden Sitzvorrichtungen 1 so breit ausgebildet, dass ein Rollstuhl selbsttätig in den Zwischenraum einfahren kann. Insbesondere beträgt der Abstand D mindestens 1m, insbesondere ist der Abstand D der grösser als 1,2m. Die Magnetvorrichtung 6 ist als ferromagnetisches Material ausgebildet und in der Klappposition gelöst von dem Magnetelement 7 angeordnet.

Die Sitzfläche 3 befindet sich in der Sitzposition. Sobald ein elektrischer Impuls auf das Magnetelement 7 gesendet wird, löst sich die Magnetkraft zwischen Magnetelement 7 und Magnetvorrichtung 6, sodass die Hochstellvorrichtung 5 die Sitzfläche 3 in die Klappposition bringt. Die Klappposition ist 90° zur Sitzposition versetzt.

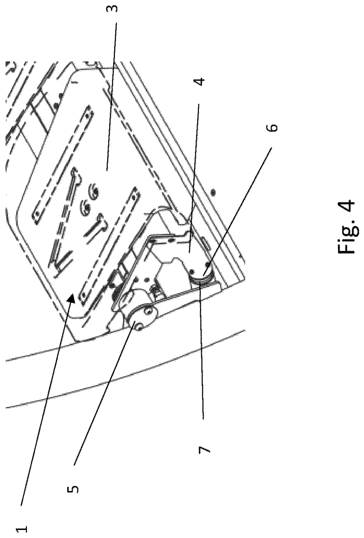

Figur 4 zeigt eine Sitzvorrichtung 1 mit der Sitzfläche 3 in einer Detailansicht. Die Sitzfläche 3 kann zusätzlich gepolstert sein (nicht dargestellt).Zwischen Magnetvorrichtung 6 and der Stützvorrichtung 4 und Magnetelement 7 ist eine Magnethaltekraft ausgebildet, die die Sitzfläche 3 in der Sitzposition hält. Eine Torsionsfeder 5 führt bei Unterbrechen der Magnethaltekraft dazu, dass die Sitzfläche automatisch in die Klappposition klappt. Die Unterbrechung der Magnethaltekraft wird durch einen elektrischen Impuls auf den Elektropermanentmagneten des Magnetelements 7 unterbrochen. Dies geschieht ferngesteuert über das Kommunikationsmodul (nicht dargestellt).

## Patentansprüche

1. Sitzvorrichtung (1) für eine Personenbeförderungseinrichtung (2) umfassend eine Sitzfläche (3) und eine Stützvorrichtung (4), wobei die Sitzfläche (3) klappbar ausgebildet ist und von einer Sitzposition in eine Klappposition bringbar ist, wobei die Sitzvorrichtung (1) eine Hochstellvorrichtung (5), insbesondere eine Federvorrichtung, umfasst, durch die die Sitzfläche (3) von der Sitzposition in die Klappposition bringbar ist, **dadurch gekennzeichnet, dass** die Sitzvorrichtung (1), insbesondere die Stützvorrichtung (4) , eine Magnetvorrichtung (6) umfasst, durch die die Sitzfläche in der Sitzposition haltbar ist.

2. Sitzvorrichtung (1) nach Anspruch 1, **dadurch gekennzeichnet, dass** die Magnetvorrichtung (6) ein ferromagnetisches Metall umfasst.

3. Sitzvorrichtung (1) nach einem der Ansprüche 1 - 2, **dadurch gekennzeichnet, dass** die Magnetvorrichtung (6) einen Permanentmagneten umfasst, insbesondere einen elektrisch abschaltbaren Permanentmagneten.

4. Personenbeförderungsvorrichtung (2) umfassend eine Sitzvorrichtung (1) gemäss einem der vorhergehenden Ansprüche und insbesondere ein Kommunikationsmodul.

5. Personenbeförderungsvorrichtung (2) nach Anspruch 4, **dadurch gekennzeichnet, dass** ein zu der Magnetvorrichtung (6) korrespondierendes Magnetelement (7) ausgebildet ist, wobei zwischen Magnetvorrichtung (6) und Magnetelement (7) eine, insbesondere elektrisch lösbare, Magnethaltekraft erzielbar ist.

6. Personenbeförderungsvorrichtung (2) nach einem der vorhergehenden Ansprüche 4-5, **dadurch gekennzeichnet, dass** das Magnetelement (7) ein Elektropermanentmagnet ist, insbesondere ein fernsteuerbarer Elektropermanentmagnet.

7. Personenbeförderungsvorrichtung (2) nach einem der vorhergehenden Ansprüche 4-5, **dadurch gekennzeichnet, dass** das Magnetelement (7) ein Elektromagnet ist und die Magnetvorrichtung (6) insbesondere ein Permanentmagnet ist.

8. Personenbeförderungsvorrichtung (2) nach einem der vorhergehenden Ansprüche 4-7, **dadurch gekennzeichnet, dass** die Sitzvorrichtung (1) mehrere Sitzflächen (8) nebeneinander aufweist.

9. Personenbeförderungsvorrichtung (2) nach einem der vorhergehenden Ansprüche 4-8, **dadurch gekennzeichnet, dass** zwei gegenüberliegende Sitzvorrichtungen (1) ausgebildet sind.

10. Personenbeförderungsvorrichtung (2) nach Anspruch 9, **dadurch gekennzeichnet, dass** der freie Raum zwischen den Sitzvorrichtungen (1) in der Klappposition zumindest im Wesentlichen 1 m, insbesondere 1.2m beträgt.

11. Personenbeförderungsvorrichtung (2) nach einem der vorhergehenden Ansprüche 4-10, **dadurch gekennzeichnet, dass** das Kommunikationsmodul derartig ausgebildet ist, dass ein Steuerbefehl einer Steuerung empfangbar ist, die zu einem Lösen der Magnetkraft zwischen Magnetelement (7) und Magnetvorrichtung (6) führen.

12. Verfahren zum Umklappen einer Sitzvorrichtung (1) nach einem der Ansprüche 1-3 in einer Personenbeförderungsvorrichtung (2) nach einem der Ansprüche 4-10 von einer Sitz- in eine Klappposition, wobei das Magnetelement (7) und die Magnetvorrichtung (6) durch einen elektrischen Impuls voneinander getrennt werden und die Sitzvorrichtung (1) durch die Hebekraft, insbesondere Federkraft, in die Klappposition gebracht wird.

13. Verwendung eines Elektropermanentmagneten zum Lösen einer Sitzvorrichtung (1) aus einer Sitzposition, indem das Magnetfeld des Elektropermanentmagneten kurzfristig unterbrochen wird, so dass die Sitzvorrichtung (1) ferngesteuert in eine Klappposition gebracht wird.

14. Seilbahn umfassend eine Steuerung und eine Personenbeförderungsvorrichtung (2) nach einem der Ansprüche 4-10, wobei die Personenbeförderungsvorrichtung (2) an einem Seil der Seilbahn lösbar befestigbar ist, wobei die Steuerung so ausgebildet ist, dass die Sitzvorrichtung (1) von der Sitzposition in die Klappposition bringbar ist, indem die Steuerung einen Steuerbefehl an die Magnetvorrichtung (6) oder das Magnetelement (7) sendet.
